# EUROPÄISCHE PATENTSCHRIFT

(11) **EP 2 108 245 B1**
(45) Veröffentlichungstag und Bekanntmachung des Hinweises auf die Patenterteilung: **29.02.2012**
(21) Anmeldenummer: 09157515.9
(22) Anmeldetag: 07.04.2009
(51) Int. Cl.: A01F 15/08, A01F 21/00, A01D 75/20

(54) **Kombination aus einem landwirtschaftlichen Gerät und einem Träger- oder Zugfahrzeug mit einem Sensor zur Erfassung des Öffnungszustands einer Abdeckung und einer automatischen Abschaltung der Zapfwelle**
Combination of an agricultural device and a carrier or trailer vehicle with a sensor for recording the opening state of a covering and an automatic deactivation of the p.t.o. shaft
Combinaison constituée d'un appareil agricole et d'un véhicule porteur ou de traction dotée d'un capteur destiné à la saisie de l'état d'ouverture d'une bâche et d'un arrêt automatique de la prise de force

(30) Priorität: 12.04.2008 DE 102008018541
(43) Veröffentlichungstag der Anmeldung: 14.10.2009
(73) Patentinhaber: Deere & Company, Moline, IL 61265-8098 (US)
(72) Erfinder: Viaud, Jean, 70100 Gray (FR)
(74) Vertreter: Holst, Sönke

(56) Entgegenhaltungen:
- EP-A- 1 293 117
- EP-A- 1 593 299
- EP-A- 1 813 146
- DE-A1- 4 309 668
- US-A- 6 092 013

## Beschreibung

Die Erfindung betrifft eine Kombination aus einem landwirtschaftlichen Gerät und einem Träger- oder Zugfahrzeug, wobei:
das Träger- oder Zugfahrzeug eine mittels einer Kupplung wahlweise ein- und ausschaltbare Zapfwelle aufweist,
das Gerät antreibbare Elemente umfasst, die mit der Zapfwelle in Antriebsverbindung stehen und durch wenigstens eine manuell zu öffnende Abdeckung nach außen hin abgedeckt sind, und
das Gerät einen Sensor zur Erfassung des Öffnungszustands der Abdeckung aufweist, der mit einer elektronischen Steuereinheit des Geräts gekoppelt ist, die im Fall einer durch den Sensor nachgewiesenen Öffnung der Abdeckung veranlasst, dass der Antrieb der antreibbaren Elemente des Geräts unterbrochen wird.

### Stand der Technik

Bei landwirtschaftlichen Geräten sind bewegliche Elemente aus Sicherheitsgründen durch Abdeckungen nach außen hin abgedeckt, um den Bediener und andere Personen zu schützen. Da die Innenräume der Geräte aber zu Kontroll- und Wartungszwecken zugänglich sein müssen, sind die Abdeckungen abnehmbar oder verschwenkbar am Gerät angebracht. Um Unfälle zu verhindern, sind die Abdeckungen in der Regel nur mittels geeigneter Werkzeuge zu öffnen, was den Nachteil hat, dass sie ohne das geeignete Werkzeug nicht geöffnet werden können. Stehen diese gerade nicht zur Verfügung, sind Arbeiten am Gerät nicht möglich.

Weiterhin wurde vorgeschlagen, den Verbrennungsmotor einer selbstfahrenden landwirtschaftlichen Arbeitsmaschine selbsttätig anzuhalten, wenn ein Sensor erfasst, dass eine Abdeckung der Arbeitsmaschine geöffnet wurde (DE 43 09 668 A). Da sich sowohl die Abdeckung als auch der Verbrennungsmotor an Bord der selbstfahrenden Arbeitsmaschine befinden, ist die Realisierung dieser Steuerung nicht weiter problematisch.

Schwieriger ist eine Überwachung der Abdeckungen hingegen bei Geräten, die von einem Träger- oder Zugfahrzeug getragen oder gezogenen werden oder auf andere Weise damit verbunden sind und durch eine Zapfwelle des Träger- oder Zugfahrzeugs angetrieben werden, da das Gerät in die Ablaufsteuerung des Träger- oder Zugfahrzeugs eingreifen müsste, um dessen Antrieb abzuschalten. Beispielsweise wurde vorgeschlagen, in den Antriebsstrang einer Ballenpresse stromab des Zapfwellenausgangs eines Traktors eine separate Kupplung anzuordnen, die selbsttätig durch den Öffnungszustand von Abdeckungen erfassenden Sensoren angesteuert wird, so dass die angetriebenen Elemente der Ballenpresse, zwangsweise angehaiten werden, wenn die Abdeckung geöffnet wird (DE 101 45 407 A). Hier ist der Aufwand für die zusätzliche Kupplung als nachteilig anzusehen.

Die EP 1 813 146 A beschreibt eine Kombination aus einem Traktor und einer Ballenpresse, die jeweils mit einer elektronischen Steuereinheit ausgestattet sind. Die Steuereinheiten kommunizieren miteinander über einen Bus, sodass die Steuereinheit der Ballenpresse die Steuereinheit des Traktors instruieren kann, den Traktor zwecks Umwickelns und Auswurfs eines Ballens anzuhalten. Vor der Aufnahme eines Pressvorgangs veranlasst die Steuerung der Ballenpresse, dass die Zapfwelle des Traktors in Drehung verbracht wird.

### Aufgabe

Das der Erfindung zugrunde liegende Problem wird darin gesehen, eine Kombination aus einem landwirtschaftlichen Gerät und einem Träger- oder Zugfahrzeug bereitzustellen, bei der ohne großen Aufwand Unfälle verhindert werden, die sich ereignen können, wenn bei laufendem Gerät Abdeckungen geöffnet werden.

### Lösung

Dieses Problem wird erfindungsgemäß durch die Lehre des Patentanspruchs 1 gelöst, wobei in dem weiteren Patentanspruch Merkmale aufgeführt sind, die die Lösung in vorteilhafter Weise weiterentwickeln.

Eine Kombination setzt sich aus einem landwirtschaftlichen Gerät und einem Träger- oder Zugfahrzeug zusammen, von dem das Gerät getragen, gezogen oder anderweitig über ein Feld bewegt werden kann. Das Träger- oder Zugfahrzeug umfasst eine elektronische Steuereinheit, die mit einem Aktor in Verbindung steht, mit dem eine Kupplung für eine Zapfwelle ein- und ausgeschaltet werden kann. Das Gerät weist wiederum antreibbare Elemente auf, die von der Zapfwelle antreibbar sind. Außerdem umfasst das Gerät eine ihm zugeordnete elektronische Steuereinheit, die mit einem Sensor in Verbindung steht, der den Öffnungszustand einer manuell zu öffnenden, zur Abdeckung der angetriebenen Elemente dienenden Abdeckung des Geräts erfasst. Die beiden Steuereinheiten kommunizieren über eine Busverbindung miteinander, sei es drahtgebunden, über einen Lichtwellenleiter oder drahtlos, z. B. durch Radio- oder Lichtwellen. Die Busverbindung kann insbesondere gemäß der Norm ISO 11783 ausgestaltet sein. Falls der Sensor der elektronischen Steuereinheit des Geräts mitteilt, dass die Abdeckung geöffnet ist oder wird, übermittelt die elektronische Steuereinheit des Geräts der elektronischen Steuereinheit des Träger- oder Zugfahrzeugs die Anweisung, den Aktor zu veranlassen, die Kupplung der Zapfwelle zu öffnen, um die durch die geöffnete Abdeckung entstehende Gefahr für den Bediener oder andere, sich in der Nähe befindliche Personen zu unterbinden. Ist die Kupplung der Zapfwelle zum Zeitpunkt der Öffnung der Abdeckung noch nicht geschlossen, verhindert die elektronische Steuereinheit des Träger- oder Zugfahrzeugs, dass der Aktor veranlasst wird, die Kupplung zu schließen, auch wenn ein Bediener den Zapfwellenschalter einschaltet. In beiden Fällen wird vorzugsweise dem Bediener ein Warnhinweis gegeben.

Da das Anhalten bzw. Verhindern des Anlaufens der Zapfwelle nur auf in der Regel bereits vorhandenen Bausteinen beruht, erreicht man auf diese Weise ohne größeren zusätzlichen Aufwand einen selbsttätigen Stillstand der sich bewegenden Elemente des Geräts, um die Unfallgefahr bei einer geöffneten Abdeckung zu vermeiden. Die Sicherheitsbedingungen können nunmehr auch mit Abdeckungen erfüllt werden, die ohne Werkzeuge geöffnet werden können.

Die Erfindung kann an beliebigen landwirtschaftlichen Geräten verwendet werden, die durch eine Zapfwelle angetriebene, durch Abdeckungen geschützte Elemente aufweisen. Beispiele sind Ballenpressen für runde und rechteckige Ballen, Ladewagen, Bodenbearbeitungsmaschinen, Mähgeräte und angebaute oder gezogene Feldhäcksler.

### Ausführungsbeispiel

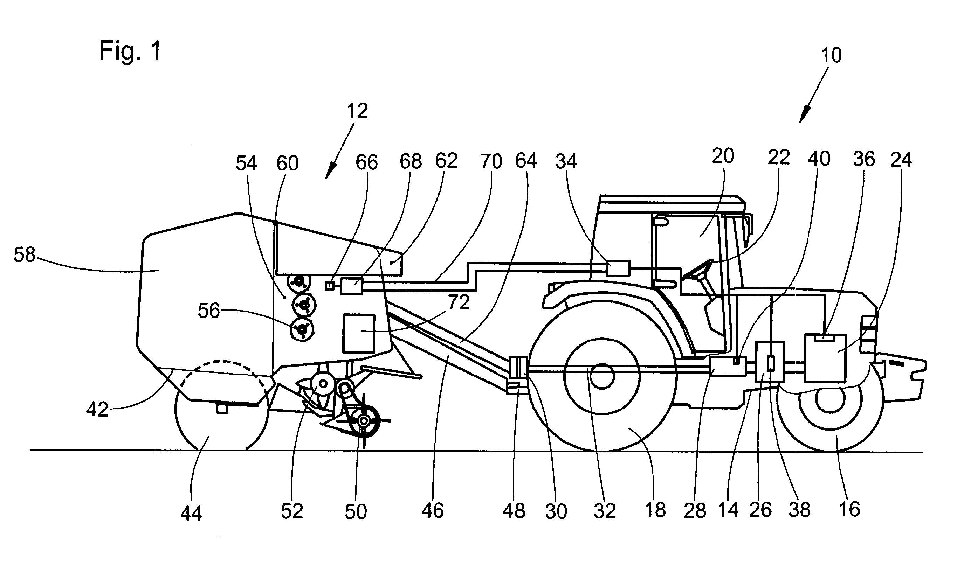

In der Zeichnung ist ein nachfolgend näher beschriebenes Ausführungsbeispiel der Erfindung dargestellt. Sie zeigt eine schematische seitliche Ansicht einer Kombination aus einem Zugfahrzeug in Form eines Traktors und einem Gerät in Form einer Rundballenpresse.

Die dargestellte Kombination setzt sich aus einem Zugfahrzeug 10 in Form eines Traktors und einem Gerät 12 in Form einer Rundballenpresse zusammen. Das Zugfahrzeug 10 umfasst ein mit einem Rahmen ausgestattetes Fahrgestell 14, das sich über vordere, lenkbare Räder 16 und hintere, antreibbare Räder 18 auf dem Erdboden abstützt. Am Fahrgestell 14 sind eine Kabine 20 mit einem Bedienerarbeitsplatz, an dem ein Sitz (nicht gezeigt) und ein Lenkrad 22 angeordnet sind, und ein Verbrennungsmotor 24 befestigt. Die Kurbelwelle des Verbrennungsmotors 24 ist über eine Kupplung 26 mit einem Zapfwellengetriebe 28 verbunden, das wiederum über eine Zapfwelle 32 einen Zapfwellenausgang 30 antreibt. Eine elektronische Steuereinheit 34 ist elektrisch mit einer Motorsteuerung 36, die Betriebsparameter des Verbrennungsmotors 24 kontrolliert und steuert, und mit einem fremdkraftbetätigten Aktor 38 verbunden, der die Kupplung 26 öffnen und schließen kann und beispielsweise elektrisch oder hydraulisch betätigt wird. Die elektronische Steuereinheit 34 ist auch mit einem Aktor 40 verbunden, mit dem die Übersetzung und somit die Ausgangsdrehzahl des Zapfwellengetriebes 28 auswählbar ist. Der Verbrennungsmotor 24 treibt über ein weiteres, nicht dargestelltes Getriebe auch die Räder 18 und ggf. 16 an.

Das Gerät 12 umfasst ein Fahrgestell 42, das sich über Räder 44 auf dem Erdboden abstützt und über eine Deichsel 46 mit einer Anhängekupplung 48 des Zugfahrzeugs 10 verbunden ist. Das Gerät 12 umfasst einen Gutaufnehmer 50, der auf dem Feld liegendes Erntegut oberschlächtig fördert und einem Rotor 52 zuführt, der es in einen Ballenpressraum 54 fördert. Der Ballenpressraum 54 ist durch Walzen 56 umschlossen. Im rückwärtigen Bereich des Geräts 12 ist eine nach hinten und oben aufschwenkbare Rücktür 58 vorgesehen, die zum Auswurf eines fertig gestellten Ballens um eine horizontal und quer zur Vorwärtsrichtung verlaufende Achse 60 an der Oberseite des Fahrgestells 42 angelenkt ist. Die Walzen 56, der Rotor 52 und der Gutaufnehmer 50 stehen über eine Antriebswelle 64 mit dem Zapfwellenausgang 30 des Zugfahrzeugs 10 in Antriebsverbindung. Der vordere, obere Bereich des Geräts 12 ist durch eine öffen- und schließbare Abdeckung 62 nach außen hin abdeckbar, die in der Figur in geöffneter Stellung dargestellt ist und an ihrer oberen Kante um eine horizontale und sich in Vorwärtsrichtung erstreckende Achse am Fahrgestell 42 des Geräts 12 angeienkt ist und durch einen Hydraulikzylinder (nicht dargestellt) bewegt wird. Die Abdeckung 62 deckt in ihrer geschlossenen Stellung die vor der Rücktür 58 angeordneten Walzen 56 nach außen hin ab und verhindert, dass ein Bediener oder andere Personen in den Innenraum des Geräts 12 hineingreifen und sich durch bewegende Elemente, in diesem Fall die Walzen 56, verletzen. In der geöffneten Stellung erlaubt sie eine Kontrolle und Wartung der Walzen 56 und Zugang zu Verbrauchsmaterialien, wie Wickelfolie oder Garn, die in einem vor den Walzen 56 vorgesehenen Speicherraum 72 gelagert werden. Das Gerät 12 kann als Rundballenpresse mit fester Kammergröße, wie dargestellt, oder als Rundballenpresse mit variabler Kammergröße ausgeführt sein.

Der Abdeckung 62 ist ein Sensor 66 zugeordnet, der beim Öffnen der Abdeckung 62 anspricht. Der Sensor 66 kann als mechanisch durch die Abdeckung betätigter Schalter ausgeführt sein. Es können auch magnetische Sensoren (z. B. Reedrelais oder Hallsensor oder Induktionssensor) verwendet werden, die mit der Abdeckung oder daran befestigten, geeigneten permanent- oder ferromagnetischen Materialien zusammenwirken. Der Sensor 66 ist mit einer elektronischen Steuereinheit 68 verbunden, die über einen Bus 70 mit der elektronischen Steuereinheit 34 des Zugfahrzeugs 10 verbunden ist. Der Bus 70 kann gemäß der Norm ISO 11783 arbeiten. Die Motorsteuerung 36, die Aktoren 38 und 40 können durch zugeordnete Leitungen, wie in der Figur dargestellt, oder durch den Bus 70 mit der Steuereinheit 34 verbunden sein. Analog kann der Sensor 66 durch eine zugeordnete Leitung, wie in der Figur gezeigt, oder durch den Bus 70 mit der Steuereinheit 68 verbunden werden.

Vorzugsweise dienen die elektronischen Steuereinheiten 34, 68 zur selbsttätigen Steuerung der Kombination aus Zugfahrzeug 10 und Gerät 12, z. B. zur selbsttätigen Geschwindigkeitssteuerung des Zugfahrzeugs 10 abhängig von der Rate aufgenommenen Emteguts und der aktuellen Ballengröße, und zum selbsttätigen Anhalten und Wiederanfahren der Kombination nach Fertigstellung und Auswurf eines Ballens. Hierzu wird auf die Offenbarung der EP 1 813 146 A verwiesen, die durch Verweis mit in die vorliegenden Unterlagen aufgenommen wird.

Um zu verhindern, dass der Bediener bei sich drehender Antriebswelle 64 die Abdeckung F2 öffnet und sich an den rotierenden Walze 56 verletzt, sind die Steuereinheiten 34, 68 derart programmiert, dass die Steuereinheit 68 des Geräts 12 eine Anweisung an die Steuereinheit 34 des Zugfahrzeugs 10 übersendet, den Aktor 38 in eine die Kupplung 26 trennende Stellung zu bringen, wenn der Sensor 66 der Steuereinheit 34 des Geräts 12 mitteilt, dass die Abdeckung 62 in der geöffneten Stellung ist. Dadurch erreicht man, dass die Zapfwelle 32 sofort angehalten wird, was auch zum Stopp der angetriebenen Elemente 56 führt. Es wäre auch denkbar, in diesem Fall über die Steuereinheit 34 eine Zapfwellenbremse (nicht gezeigt) des Zugfahrzeugs 10 zu aktivieren. War die Zapfwelle 32 zum Zeitpunkt der Öffnung der Abdeckung 62 noch nicht im Betrieb, verhindert die elektronische Steuereinheit 34 des Zugfahrzeugs 32, dass der Aktor 38 die Kupplung 26 schließt. Weiterhin wird dem Bediener ein Warnhinweis gegeben, sei es optisch über eine Anzeigeeinrichtung oder eine Sprachnachricht. Die Steuereinheit 68 informiert die Steuereinheit 34, dass die Sicherheitsbedingungen wieder hergestellt sind, wenn der Sensor 66 der Steuereinheit 68 mitgeteilt hat, dass die Abdeckung 62 geschlossen wurde. Die Steuereinheit 34 weist den Aktor 38 aber daraufhin vorzugsweise erst dann an, die Kupplung 26 zu schließen, nachdem der Bediener eine Bestätigungstaste betätigt oder einen Zapfwellenschalter eingeschaltet hat. Weiterhin kann auch die Rücktür 58 mit einem Sensor 66 ausgestattet werden, der über die Steuereinheiten 68, 34 veranlasst, dass die Zapfwelle 32 bei geöffneter Rücktür 58 selbsttätig abgeschaltet wird bzw. bleibt.

## Patentansprüche

1. Kombination aus einem landwirtschaftlichen Gerät (12) und einem Träger- oder Zugfahrzeug (10), wobei:
das Träger- oder Zugfahrzeug (10) eine mittels einer Kupplung (26) wahiweise ein- und ausschaltbare Zapfwelle (32)aufweist,
das Gerät (12) antreibbare Elemente (56) umfasst, die mit der Zapfwelle (32) in Antriebsverbindung stehen und durch wenigstens eine manuell zu öffnende Abdeckung (62) nach außen hin abgedeckt sind, und
das Gerät (12) einen Sensor (66) zur Erfassung des Öffnungszustands der Abdeckung (62) aufweist, der mit einer elektronischen Steuereinheit (68) des Geräts (12) gekoppelt ist, die im Fall einer durch den Sensor (66) nachgewiesenen Öffnung der Abdeckung (62) veranlasst, dass der Antrieb der antreibbaren Elemente (56) des Geräts (12) unterbrochen wird,
**dadurch gekennzeichnet, dass** die elektronische Steuereinheit (68) des Geräts (12) über einen Bus (70) mit einer elektronischen Steuereinheit (34) des Träger- oder Zugfahrzeugs (10) verbunden ist,
dass die elektronische Steuereinheit (34) des Träger- oder Zugfahrzeugs (10) mit einem fremdkraftbetätigten Aktor (38) zur Ein- und Ausschaltung der Kupplung (26) der Zapfwelle (32) in Verbindung steht, und
dass die elektronische Steuereinheit (68) des Geräts (12) die elektronische Steuereinheit (34) des Träger- oder Zugfahrzeugs (10) im Fall einer durch den Sensor (66) nachgewiesenen Öffnung der Abdeckung (62) veranlasst, den Aktor (38) zur Ausschaltung der Kupplung (26) der Zapfwelle (32) anzuweisen und/oder zu verhindern, dass der Aktor (38) die Kupplung (26) schließt.

2. Kombination nach Anspruch 1, **dadurch gekennzeichnet, dass** das Gerät (12) eine Rundballenpresse ist, und dass die Abdeckung (62) eine Rücktür (58) der Rundballenpresse oder eine von der Rücktür (58) separate Abdeckung (62) ist.

3. Kombination nach Anspruch 1 oder 2, **dadurch gekennzeichnet, dass** die elektronische Steuereinheit (34) des Träger- oder Zugfahrzeugs (10) betreibbar ist, den Aktor (38) nach einer nachgewiesenen Öffnung der Abdeckung (62) erst dann anzuweisen, die Kupplung (26) wieder zu schließen, wenn die elektronische Steuereinheit (68) des Geräts (12) der elektronischen Steuereinheit (34) des Träger- oder Zugfahrzeugs (10) mitgeteilt hat, dass der Sensor (66) nachweist, dass die Abdeckung (62) geschlossen ist und eine Bestätigungstaste gedrückt oder ein Zapfwellenschalter eingeschaltet wurde.

## Claims

1. Combination of an agricultural device (12) and a carrier or towing vehicle (10), wherein:
the carrier or towing vehicle (10) has a power take-off shaft (32) which can optionally be switched on and off by means of a coupling (26),
the device (12) comprises drivable elements (56) which are drive-connected to the power take-off shaft (32) and are covered to the outside by at least one covering (62) which can be opened manually, and
the device (12) has a sensor (66) for recording the opening state of the covering (62), which sensor is coupled to an electronic control unit (68) of the device (12), the electronic control unit, in the event of an opening of the covering (62) being detected by the sensor (66), causing the drive of the drivable elements (56) of the device (12) to be interrupted,
**characterized in that** the electronic control unit (68) of the device (12) is connected to an electronic control unit (34) of the carrier or towing vehicle (10) via a bus (70),
**in that** the electronic control unit (34) of the carrier or towing vehicle (10) is connected to an actuator (38) which is actuated by external force and is intended for switching the coupling (26) of the power take-off shaft (32) on and off, and
**in that** the electronic control unit (68) of the device (12) causes the electronic control unit (34) of the carrier or towing vehicle (10), in the event of an opening of the covering (62) being detected by the sensor (66), to instruct the actuator (38) to switch off the coupling (26) of the power take-off shaft (32) and/or to prevent the actuator (38) from closing the coupling (26).

2. Combination according to Claim 1, **characterized in that** the device (12) is a round baler, and **in that** the covering (62) is a rear door (58) of the round baler or is a covering (62) which is separate from the rear door (58).

3. Combination according to Claim 1 or 2, **characterized in that** the electronic control unit (34) of the carrier or trowing vehicle (10) can be operated so as, after an opening of the covering (62) is detected, to instruct the actuator (38) to re-close the coupling (26) only when the electronic control unit (68) of the device (12) has communicated to the electronic control unit (34) of the carrier or towing vehicle (10) that the sensor (66) is detecting that the covering (62) is closed and a confirmation key has been pressed or a power take-off shaft switch has been switched on.

## Revendications

1. Combinaison constituée d'un appareil agricole (12) et d'un véhicule porteur ou de traction (10), dans laquelle :
- le véhicule porteur ou de traction (10) présente une prise de force (32) pouvant être connectée et déconnectée de manière sélective au moyen d'un accouplement (26),
- l'appareil (12) comprend des éléments entraînables (56), qui sont en liaison d'entraînement avec la prise de force (32) et qui sont recouverts vers l'extérieur par au moins une couverture (62) pouvant être ouverte manuellement, et
- l'appareil (12) présente un capteur (66) pour la détection de l'état d'ouverture de la couverture (62), lequel est accouplé à une unité de commande électronique (68) de l'appareil (12) qui, dans le cas d'une ouverture de la couverture (62) mise en évidence par le capteur (66), fait en sorte que l'entraînement des éléments entraînables (56) de l'appareil (12) soit interrompu,
**caractérisée en ce que** l'unité de commande électronique (68) de l'appareil (12) est connectée par un bus (70) à une unité de commande électronique (34) du véhicule porteur ou de traction (10),
**en ce que** l'unité de commande électronique (34) du véhicule porteur ou de traction (10) est en liaison avec un actionneur (38) actionné par une force extérieure pour connecter et déconnecter l'accouplement (26) de la prise de force (32), et **en ce que** l'unité de commande électronique (68) de l'appareil (12) fait en sorte que l'unité de commande (34) du véhicule porteur ou de traction (10), dans le cas d'une ouverture de la couverture (62) mise en évidence par le capteur (66), commande à l'actionneur (38) de déconnecter l'accouplement (26) de la prise de force (32) et/ou d'empêcher que l'actionneur (38) ferme l'accouplement (26).

2. Combinaison selon la revendication 1, **caractérisée en ce que** l'appareil (12) est une presse à balles rondes, et **en ce que** la couverture (62) est une porte arrière (58) de la presse à balles rondes ou une couverture (62) séparée de la porte arrière (58).

3. Combinaison selon la revendication 1 ou 2, **caractérisée en ce que** l'unité de commande électronique (34) du véhicule porteur ou de traction (10) peut être actionnée pour commander à l'actionneur (38), après la mise en évidence d'une ouverture de la couverture (62), de seulement refermer l'accouplement (26) lorsque l'unité de commande électronique (68) de l'appareil (12) a communiqué à l'unité de commande électronique (34) du véhicule porteur ou de traction (10) que le capteur (66) a mis en évidence que la couverture (62) était fermée et qu'une touche de confirmation a été pressée ou qu'un commutateur de prise de force a été enclenché.
